(19) Europäisches Patentamt
European Patent Office
Office européen des brevets

(11) Veröffentlichungsnummer: **0 302 373**
**B1**

(12) # EUROPÄISCHE PATENTSCHRIFT

(45) Veröffentlichungstag der Patentschrift: **19.12.90**

(51) Int. Cl.[5]: **C09D 135/00,** C08F 8/32, C08L 35/00, C08K 5/35

(21) Anmeldenummer: **88112106.5**

(22) Anmeldetag: **27.07.88**

(54) **Verfahren zur Herstellung von feuchtigkeitshärtenden Bindemittelkompositionen und ihre Verwendung.**

(30) Priorität: **07.08.87 DE 3726264**

(43) Veröffentlichungstag der Anmeldung: **08.02.89 Patentblatt 89/6**

(45) Bekanntmachung des Hinweises auf die Patenterteilung: **19.12.90 Patentblatt 90/51**

(84) Benannte Vertragsstaaten: **AT BE CH DE ES FR GB IT LI NL SE**

(56) Entgegenhaltungen: **DE-A- 2 610 406**

(73) Patentinhaber: **BAYER AG, D-5090 Leverkusen 1 Bayerwerk(DE)**

(72) Erfinder: **Blum, Harald, Dr., Auf dem Westkamp 1, D-4175 Wachendonk 1(DE)**
Erfinder: **Pedain, Josef, Dr., Haferkamp 6, D-5000 Köln 80(DE)**
Erfinder: **Wamprecht, Christian, Dr., Wilhelmstrasse 100, D-4150 Krefeld(DE)**
Erfinder: **Sonntag, Michael, Dr., Gartenstrasse 27, D-5068 Odenthal(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 302 373 B1

## Beschreibung

Die vorliegende Erfindung betrifft ein Verfahren zur Herstellung von unter dem Einfluß von Feuchtigkeit aushärtbaren Bindemittelkompositionen, bestehend im wesentlichen aus speziellen bernsteinsäureanhydridhaltigen Copolymerisaten und Oxazolanen und ihre Verwendung als Bindemittel für Lacke und Beschichtungsmassen.

Die Verwendung von Kombinationen aus bernsteinsäureanhydridhaltigen Copolymerisaten und Polyhydroxylverbindungen als Bindemittel für Lacke und Beschichtungsmassen ist aus der EP-A 48 128 bereits bekannt. Der Gedanke, das Prinzip dieser Vorveröffentlichung auf die Umsetzung von Aminen mit Anhydriden zu übertragen, scheitert jedoch an der Tatsache, daß die Umsetzung von Aminen mit Anhydriden eine bereits bei Raumtemperatur sehr rasch ablaufende Reaktion darstellt, die unter Anhydridspaltung zu vernetzten Produkten führt. Die daraus resultierenden extrem kurzen Standzeiten verhindern bisher die gemeinsame Verwendung von Polyanhydriden und Polyaminen in Beschichtungssystemen.

Eine Möglichkeit, die Standzeiten zu verlängern, ist die Verwendung von Oxazolanen anstelle der Amine.

Wasserhärtbare Zusammensetzungen aus Oxazolanen und Polyanhydriden sind im Prinzip aus der DE-OS 2 610 406 bekannt. Dort werden Oxazolane mit Polyanhydriden für wasserhärtbare Dicht- und Klebstoffmassen kombiniert. Als geeignete Polyanhydride werden Umsetzungsprodukte von mehrfach ungesättigten Fettsäuren mit Maleinsäureanhydrid und Polyanhydride aus $C_3$-$C_6$-Alkyl-(meth)acrylat und Maleinsäureanhydrid, insbesondere aus Butylacrylat und Maleinsäureanhydrid beschrieben.

Wie eigene Versuche der Anmelderin zeigten, sind die in der DE-OS 2 610 406 konkret beschriebenen Systeme bezüglich ihrer Eignung zur Herstellung hochwertiger, farbloser Lackfilme hoher Härte und guter Lösungsmittel- und Chemikalienbeständigkeit noch stark verbesserungsbedürftig. Dies gilt sowohl für die in den Ausführungsbeispielen beschriebenen Systemen auf Basis von Copolymerisaten aus Maleinsäureanhydrid und Butylacrylat als auch für die Systeme auf Basis von Umsetzungsprodukten von Maleinsäureanhydrid mit mehrfach ungesättigten Fettsäureestern, die zu vergilbenden Endprodukten führen.

Es war daher die der Erfindung zugrundeliegende Aufgabe, neue Bindemittelkompositionen auf Basis von Copolymerisaten von Maleinsäureanhydrid mit anderen olefinisch ungesättigten Monomeren und Oxazolanen zur Verfügung zu stellen, die bezüglich ihrer lacktechnischen Eigenschaften, insbesondere bezüglich der Härte, Lösungsmittel- und Chemikalienbeständigkeit, sowie bezüglich der Vergilbungsbeständigkeit der aus ihnen hergestellten Beschichtungen den hohen Anforderungen der Praxis genügen.

Diese Aufgabe konnte durch die Bereitstellung des nachstehend näher beschriebenen erfindungsgemäßen Verfahrens gelöst werden. Die erfindungsgemäßen Verfahrensprodukte bestehen im wesentlichen aus bernsteinsäureanhydridhaltigen Copolymerisaten und Oxazolanen, wobei die Oxazolane sowohl in Abmischung mit den Copolymerisaten als auch in an die Copolymerisate chemisch gebundener Form vorliegen können. Unter "bernsteinsäureanhydridhaltigen Copolymerisaten" sind im Rahmen der Erfindung Copolymerisate von Maleinsäureanhydrid mit anderen olefinisch ungesättigten Monomeren der nachstehend näher beschriebenen Art zu verstehen, die "Bernsteinsäureanhydrid-Gruppierungen" der Formel

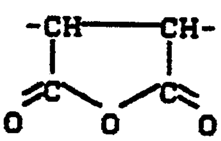

enthalten, wie sie bei der Polymerisation bzw. Copolymerisation von Maleinsäureanhydrid in das Polymerisat eingebaut werden.

Gegenstand der Erfindung ist ein Verfahren zur Herstellung von feuchtigkeitshärtenden Bindemittelkompositionen durch Abmischung und gegebenenfalls Umsetzung unter Feuchtigkeitsausschluß von

A) 50 bis 97 Gew.-Teilen an, Bernsteinsäureanhydrid-Einheiten aufweisenden, Copolymerisaten des Molekulargewichtsbereichs Mw von 1500 bis 75 000 von Maleinsäureanhydrid mit anderen olefinisch ungesättigten Monomeren,
mit

B) 3 bis 50 Gew.-Teilen an, gegebenenfalls gegenüber Säureanhydridgruppen reaktionsfähige Wasserstoffatome aufweisenden, Oxazolanen des Molekulargewichtsbereichs Mw 87 bis 10.000
gegebenenfalls unter Mitverwendung von Lösungsmitteln und/oder sonstigen aus der Lacktechnologie bekannten Hilfs- und Zusatzstoffen, wobei die Mengenverhältnisse der Einzelkomponenten unter Einbeziehung der gegebenenfalls in Abwesenheit von Feuchtigkeit zwischen den Komponenten A) und B) spontan ablaufenden Additionsreaktion so gewählt werden, daß in der resultierenden Komposition auf jede Oxazolangruppe 0,25 bis 10 Anhydridgruppen entfallen,

dadurch gekennzeichnet, daß es sich bei der Komponente A) um in an sich bekannter Weise hergestellte Copolymerisate von

a) 4,5 bis 45 Gew.-Teile Maleinsäureanhydrid,

b) 5 bis 80 Gew.-Teile Monomeren der Formel

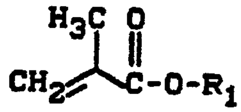

und/oder der Formel

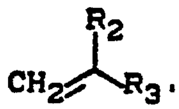

c) 15 bis 92 Gew.-Teile Monomeren der Formel

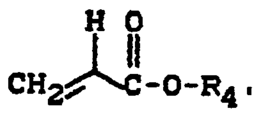

handelt, und wobei in den genannten Formeln

$R_1$ für einen aliphatischen oder cycloaliphatischen, gegebenenfalls Sauerstoff, Schwefel oder Stickstoff als Heteroatom enthaltenden Kohlenwasserstoffrest mit 1 bis 12 Kohlenstoffatomen steht,

$R_2$ für Wasserstoff, eine Methyl- oder Ethylgruppe oder für Chlor oder Fluor steht,

$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam-oder Lactongruppen enthält, steht, und

$R_4$ bezüglich seiner Bedeutung der für $R_1$ gemachten Definition entspricht.

Gegenstand der Erfindung ist auch die Verwendung der nach diesem Verfahren erhältlichen Bindemittelkompositionen als unter dem Einfluß von Feuchtigkeit aushärtbare Lacke oder Beschichtungsmassen oder als Bindemittel zur Herstellung derartiger Lacke oder Beschichtungsmassen.

Die Komponente A) besteht aus Copolymerisaten von Maleinsäureanhydrid mit Monomeren der oben unter b) und c) genannten Art.

Bevorzugte Monomere b) und c) sind solche der obengenannten allgemeinen Formeln, für welche

$R_1$ für einen linearen oder verzweigten aliphatischen Kohlenwasserstoffrest mit 1 bis 8 Kohlenstoffatomen steht,

$R_2$ für Wasserstoff oder eine Methylgruppe steht,

$R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht, und

$R_4$ bezüglich seiner Bedeutung der zuletzt für $R_1$ gemachten Definition entspricht.

Typische Beispiele für geeignete bzw. bevorzugte Reste $R_1$ bzw. $R_4$ sind Methyl-, Ethyl-, n-Propyl, Isopropyl-, n-Butyl-, Isobutyl-, n-Pentyl-, n-Hexyl-, 2-Ethylhexyl-, n-Octyl-, n-Decyl- oder n-Dodecylreste.

Typische Beispiele für geeignete bzw. bevorzugte Reste $R_2$ sind Wasserstoff-, Methyl-, Ethyl-, Chlor- oder Fluor-.

Typische Beispiele für geeignete bzw. bevorzugte Reste $R_3$ sind aliphatische Reste der soeben für $R_1$ beispielhaft genannten Art mit Ausnahme von Wasserstoff und Methyl und außerdem Phenyl-, Cyclohexyl-, 2-, 3- und 4-Methylphenyl-, Propoxy-, n-Butoxy-, Acetyl-, Propionyl-, n-Butyryl- oder N-Methoxymethyl-aminocarbonyl-Reste.

Bevorzugte Komponenten A) sind solche, in denen

a) 4,5 bis 45 Gew.-Teile, vorzugsweise 6 bis 19 Gew.-Teile Maleinsäureanhydrid,
b) 25 bis 80 Gew.-Teile, insbesondere 41 bis 65 Gew.-Teile an Monomeren der Formeln

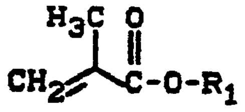

und/oder

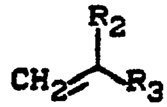

und
c) 20 bis 75 Gew.-Teile, insbesondere 25 bis 50 Gew.-Teile an Monomeren der Formel

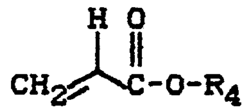

in copolymerisierter Form vorliegen.

Besonders bevorzugt werden als Komponente A) solche der gemachten Definition entsprechende Copolymerisate eingesetzt, in denen pro 100 Gew.-Teilen Maleinsäureanhydrid 40 bis 140 Gew.-Teile an anderen Monomeren ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

Die Komponente A), d.h. die bernsteinsäureanhydridhaltigen Copolymerisate weisen im allgemeinen ein als Gewichtsmittel bestimmtes, nach der Gelpermeationschromotographie ermittelbares Molekulargewicht von 1500 bis 75 000, vorzugsweise von 3000 bis 50 000 und ganz besonders bevorzugt von 5000 bis 35 000 auf. Ihr Anhydridäquivalentgewicht (= Menge in "g", die 1 Mol Anhydridgruppen enthält) liegt bei 4900 bis 217, vorzugsweise bei 1400 bis 326. Sie werden in an sich bekannter Weise durch eine radikalisch initiierte Copolymerisation, vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Geeignet sind beispielsweise Ester wie Ethylacetat, Propylacetat, Butylacetat, Isopropylacetat, Isobutylacetat, sec.-Butylacetat, Amylacetat, Hexylacetat, Benzylacetat, Ethylpropionat, Butylpropionat, Methylglykolacetat, Ethylglykolacetat, Butylglykolacetat, Ethyldiglykolacetat, Ethylglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Benzin, Terpentinöl, Solventnaphtha, Terpene, Hexan, Heptan, Octan, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösungsmittel.

Die Copolymerisation wird üblicherweise bei Feststoffgehalten von 30 bis 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 % beendet. Gegebenenfalls ist es erforderlich durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Maleinsäureanhydridrestmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomerenmischung, wie z.B. Styrol, Butylacrylat, zu reduzieren.

Es ist auch möglich einen Teil des Maleinsäureanhydrids mit dem Lösungsmittel vorzulegen, oder das Maleinsäureanhydrid schneller als die anderen Monomeren zuzutropfen. Diese geänderten Herstellverfahren können in gewissen Fällen die Verträglichkeit der Komponenten der Bindemittelkombination verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für Reaktionstemperaturen von 60 bis 180°C geeignet sind, wie organische Peroxide, z.B.: Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2′-Azobis-(2,4-dimethylvaleronitril), 2,2′-Azobis-(isobutyronitril), 2,2′-Azobis-(2,3-dimethylbutyronitril), 1,1′-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan, Mercaptoethanol usw. in Mengen von 0 bis 10 Gew.-% eingesetzt werden.

Bei der Komponente B) handelt es sich um Oxazolane eines als Gewichtsmittel bestimmten Molekulargewichts von 87 bis 10 000, vorzugsweise 87 bis 3000 und insbesondere von 350 bis 1500. Molgewichte von bis 1000 können aus der Stöchiometrie der Ausgangsmaterialien berechnet, solche von oberhalb 1000 gelpermeationschromatographisch bestimmt werden. Unter "Oxazolanen" sind im Rahmen der Erfindung Verbindungen zu verstehen, die mindestens einen, vorzugsweise 1 bis 4 und insbesondere 2 bis 3 Oxazolanringe der Formel

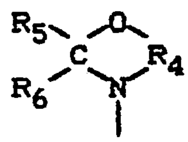

enthalten, wobei in dieser Formel
$R_5$ und $R_6$ für gleiche oder verschiedene Reste stehen und Wasserstoff oder inerte organische Reste, insbesondere aliphatische Kohlenwasserstoffreste mit 1 bis 18, vorzugsweise 1 bis 8 und insbesondere 1 bis 4 Kohlenstoffatomen stehen, oder wobei die Reste $R_5$ und $R_6$ zusammen mit dem Kohlenstoffatom des heterocyclischen Rings einen cycloaliphatischen Ring mit insgesamt 4 bis 9 Kohlenstoffatomen, insbesondere einen Cyclohexanring bilden, mit der Maßgabe, daß höchstens einer der Reste $R_5$ oder $R_6$ für Wasserstoff steht, und wobei
$R_7$ für einen Alkylenrest mit 2 bis 4, vorzugsweise 2 bis 3 Kohlenstoffatomen steht, mit der Maßgabe, daß zwischen dem Sauerstoff- und dem Stickstoffatom mindestens 2 Kohlenstoffatome angeordnet sind.

Als Komponente B) kommen beispielsweise Oxazolane der folgenden Formel

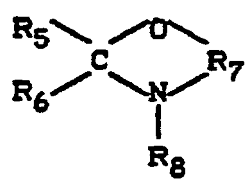

in Betracht, in welcher $R_5$, $R_6$ und $R_7$ die soeben genannte Bedeutung haben und $R_8$ für einen gegebenenfalls Hydroxyl- oder primäre bzw. sekundäre Aminogruppen aufweisenden aliphatischen Kohlenwasserstoffrest mit 1 bis 12, vorzugsweise 1 bis 4 Kohlenstoffatomen, für Wasserstoff, für einen araliphatischen Kohlenwasserstoffrest mit 7 bis 12 Kohlenstoffatomen, für einen aromatischen Kohlenwasserstoffrest mit 6 bis 12 Kohlenstoffatomen oder für einen cycloaliphatischen Kohlenwasserstoffrest mit 5 bis 10 Kohlenstoffatomen steht.

Im übrigen ist die Natur des Restes $R_8$ bezüglich der Eignung der Verbindungen als Komponente B) ohne Bedeutung. Falls es sich bei den Resten $R_8$ um gegenüber Anhydridgruppen inerte Substituenten handelt, entstehen beim erfindungsgemäßen Verfahren Gemische aus den Einzelkomponenten A) und B), wobei die inerten Substituenten letztendlich bei der erfindungsgemäßen Verwendung der erfindungsgemäßen Verfahrensprodukte in die Flächengebilde eingebaut werden, so daß deren Eigenschaften u. a. durch geeignete Auswahl der Substituenten beeinflußt werden können. Falls es sich bei den Substituenten $R_8$ um Wasserstoff oder um Kohlenwasserstoffreste mit gegenüber Anhydridgruppen reaktionsfähigen Gruppen, insbesondere um Hydroxyl- oder Aminogruppen handelt, findet im Anschluß an die Durchmischung der Einzelkomponenten A) und B) eine spontan ablaufende Additionsreaktion zwischen den Säureanhydridgruppen einerseits und den gegenüber Säureanhydridgruppen reaktionsfähigen Gruppen andererseits statt, so daß als Verfahrensprodukte ganz oder teilweise Umsetzungsprodukte aus A) und B) entstehen.

Erfindungsgemäß als Komponente B) geeignete Oxazolane, die mehr als einen Oxazolanring der vorstehend genannten allgemeinen Formel enthalten, können beispielsweise aus Monooxazolanen der zuletztgenannten allgemeinen Formel mit $R_8$ = H, oder die im Rest $R_8$ reaktionsfähige Gruppen aufweisen, durch an sich bekannte Modifizierungsreaktionen erhalten werden.

Die Herstellung der Monooxazolane der zuletztgenannten allgemeinen Formel gelingt in an sich bekannter Weise durch Umsetzung von entsprechenden Aldehyden bzw. Ketonen der Formel

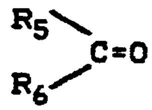 ,

die vorzugsweise ein Molekulargewicht von 72 bis 200 (Ketone) bzw. von 58 bis 128 (Aldehyde) aufweisen, mit geeigneten Hydroxyaminen der nachstehend näher genannten Art.

Geeignete Aldehyde sind beispielsweise Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldehyd, Hexahydrobenzaldehyd, Propargylaldehyd, p-Toluylaldehyd, Phenylethanal, 2-Methylpentanal, 3-Methylpentanal, 4-Methylpentanal, Sorbinaldehyd.

Besonders bevorzugt sind dabei Butyraldehyd, Isobutyraldehyd, Trimethylacetaldehyd, 2,2-Dimethylpropanal, 2-Ethylhexanal, 3-Cyclohexen-1-carboxaldehyd und Hexahydrobenzaldehyd.

Geeignete Ketone sind beispielsweise Aceton, Methylethylketon, Methylpropylketon, Methylisopropylketon, Methylbutylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Cyclopentanon, Methylcyclohexanon, Isophoron, Methyl-tert.-butylketon, 5-Methyl-3-heptanon, 4-Heptylketon, 1-Phenyl-2-propanon, Acetophenon, Methylnonylketon, Dinonylketon, 3,3,5-Trimethylcyclohexanon.

Besonders geeignete Ketone sind:
Cyclopentanon, Cyclohexanon, Methylcyclopentanon, Methylcyclohexanon, 3,3,5-Trimethylcyclohexanon, Cyclobutanon, Methylcyclobutanon, Aceton, Methylethylketon, Methylisobutylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Komponente B) zum Einsatz gelangenden Hydroxyaminen handelt es sich insbesondere um organische Verbindungen, die mindestens eine aliphatische Aminogruppe und mindestens eine aliphatisch gebundene Hydroxylgruppe aufweisen. Die Verwendung von solchen Hydroxyaminen, die aromatisch oder cycloaliphatisch gebundene Amino- oder Hydroxylgruppen aufweisen, ist zwar ebenfalls möglich, jedoch weniger bevor zugt. Die Hydroxyamine weisen im allgemeinen ein zwischen 61 und 500 vorzugsweise zwischen 61 und 300 liegendes Molekulargewicht auf.

Geeignete Hydroxyamine können z.B. sein: Bis-(2-hydroxyethyl)-amin, Bis-(2-hydroxypropyl)-amin, Bis-(2-hydroxyethyl)-amin, Bis-(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-(Hexylamino)-ethanol, 2-(Cyclohexylamino)-ethanol, 2-Amino-2-methyl-1-propanol, 2-Amino-2-ethyl-1-propanol, 2-Amino-2-propyl-1-propanol, 2-Amino-2-methyl-1,3-propandiol, 2-Amino-3-methyl-3-hydroxybutan, Aminoethanol.

Ganz besonders bevorzugt sind: Bis-(2-hydroxyethyl)-amin, Bis-(2-hydroxypropyl)-amin, Bis-(2-hydroxybutyl)-amin, Bis-(3-hydroxyhexyl)-amin, 2-(Methylamino)-ethanol, 2-(Ethylamino)-ethanol, 2-Amino-2-methyl-1-propanol und 2-Amino-2-ethyl-1-propanol.

Die Herstellung der Komponente B) erfolgt durch Umsetzung der Ausgangskomponenten, wobei im allgemeinen die Mengenverhältnisse der Reaktionspartner so gewählt werden, daß die Hydroxyamine bezogen auf die Carbonylgruppen der Aldehyde bzw. Ketone, bezüglich der Oxazolanbildung in 1- bis 1,5-fach äquivalenten Mengen vorliegen. Gegebenenfalls können zur Reaktionsbeschleunigung katalytische Mengen von sauren Substanzen wie beispielsweise p-Toluolsulfonsäure, Chlorwasserstoff, Schwefelsäure oder Aluminiumchlorid mitverwendet werden.

Die Umsetzung erfolgt im allgemeinen innerhalb des Temperaturbereichs von 60 bis 180°C, wobei die Reaktion in Gegenwart eines Schleppmittels zur Entfernung des Reaktionswassers so lange durchgeführt wird, bis die berechnete Menge an Wasser abgespalten ist bzw. bis kein Wasser mehr abgespalten wird. Anschließend werden Schleppmittel und gegebenenfalls vorliegende, nicht umgesetzte Ausgangsmaterialien destillativ abgetrennt. Geeignete Schleppmittel sind z.B. Toluol, Xylol, Cyclohexan, Octan. Die so erhaltenen Rohprodukte können ohne weitere Reinigungsschritte als Komponente B) beim erfindungsgemäßen Verfahren zur Herstellung der Bindemittelkombinationen verwendet werden.

Zur Herstellung von höherfunktionellen Oxazolanen kann beispielsweise so vorgegangen werden, daß man Monooxazolane der obengenannten allgemeinen Formel, bei welchen $R_8$ für Wasserstoff steht, oder welche im Rest $R_8$ reaktionsfähige Gruppen (insbesondere Hydroxyl-, primäre Amino- oder sekundäre Aminogruppen) aufweisen mit mindestens difunktionellen Reaktionspartnern modifiziert. Zur Modifizierung geeignete Reaktionspartner sind beispielsweise Polyisocyanate, Polyepoxide, Polycarbonsäure, einfache Polycarbonsäureester oder Polycarbonsäureanhydride.

Die im Rahmen der Erfindung besonders bevorzugte Modifizierung mit organischen Polyisocyanaten kann gemäß der Lehre der DE-OS 2 446 438 erfolgen. Geeignete Polyisocyanate sind die in dieser Vorveröffentlichung beispielhaft genannten Verbindungen. Besonders bevorzugt werden niedermolekulare (cyclo)aliphatische Diisocyanate wie Hexamethylendiisocyanat, Isophorondiisocyanat oder 4,4'-Diisocyanato-dicyclohexylmethan bzw. höhermolekulare NCO-Prepolymere auf Basis derartiger Diisocyanate eingesetzt.

Zur Modifizierung der monofunktionellen Oxazolane geeignete Polyepoxide sind beliebige organische Verbindungen, die mindestens zwei Epoxidgruppen im Molekül aufweisen. Vorzugsweise werden aliphatische Bisepoxide mit Epoxidäquivalentgewichten von 43-300, wie z.B. 1,3-Butadienbisepoxid, 1,5-Hexadienbisepoxid, Ethylenglykoldiglycidylether, Glycerin-1,3-diglycidylether, 3,4-Epoxycyclohexylmethyl-3',4'-epoxycyclohexan-carboxylat (Diepoxid 126, Degussa AG), Adipinsäure-(3,4-epoxycyclohexyl)-bisester verwendet.

Die Modifizierungsreaktion zwischen den Monooxazolanen und den Polyepoxiden erfolgt im allgemeinen innerhalb des Temperaturbereichs von 70 bis 140°C, gegebenenfalls unter Mitverwendung eines geeigneten Lösungsmittels wie z.B. Toluol oder Cyclohexan.

Eine weitere Möglichkeit der Herstellung von höherfunktionellen Oxazolanen besteht, wie nachstehend im Herstellungsbeispiel B 21 gezeigt, darin ein Polyepoxid zunächst durch Umsetzung mit primären Aminen in ein polyfunktionelles Hydroxyamin zu überführen, welches anschließend mit einem Aldehyd oder einem Keton in ein höherfunktionelles Oxazolan überführt wird.

Die Herstellung von Höherfunktionellen Oxazolanen kann auch durch Umsetzung von reaktionsfähigen Monooxazolanen der genannten Art mit Polycarbonsäuren, deren niederen Alkylestern bzw. Polycarbonsäureanhydriden im Sinne einer Veresterungsreaktion (Hydroxylgruppen im Rest $R_8$) oder im Sinne einer Amidbildungsreaktion (primäre oder sekundäre Aminogruppen im Rest $R_8$) erfolgen.

Die zur Herstellung der höherfunktionellen Oxazolane eingesetzten Monooxazolane mit reaktionsfähigen Gruppen können durch Verwendung von Hydroxyaminen der oben beispielhaft genannten Art erhalten werden, welche neben den zur Oxazolanbildung erforderlichen Hydroxyl- und Aminogruppen weitere Hydroxyl- oder Aminogruppen aufweisen, die an der Oxazolanbildung nicht beteiligt sind. Auf diese Weise werden Monooxazolane der obengenannten allgemeinen Formel erhalten, in denen der Rest $R_8$ Hydroxyl- oder reaktionsfähige Aminogruppen aufweist. Für die genannten Modifizierungsreaktionen zur Herstellung von höherfunktionellen Oxazolanen können jedoch auch solche Monooxazolane der genannten allgemeinen Formel verwendet werden, für welche der Rest $R_8$ für Wasserstoff steht, d.h. die unter Verwendung von einfachen Aminoalkoholen der beispielhaft genannten Art mit einer Hydroxyl- und einer primären Aminogruppe erhalten worden sind. Die Reaktionsfähigkeit derartiger sekundärer Aminogruppen, die Teil des heterocyclischen Rings sind, ist der Reaktionsfähigkeit von primären bzw. sekundären Aminogruppen, die Substituenten des Rests $R_8$ darstellen, in erster Näherung gleichzusetzen.

Das Molekulargewicht und die Funktionalität der höherfunktionellen Oxazolane kann auf einfache Weise durch geeignete Wahl der zur Modifizierung der Monooxazolane eingesetzten Reaktionspartner eingestellt werden. Vorzugsweise werden im Sinne der Modifizierungsreaktion monofunktionelle Monooxazolane mit di- bzw. trifunktionellen Reaktionspartnern zu Bis- bzw. Trisoxazolanen des Molekulargewichtsbereichs 350 bis 1500 umgesetzt.

Unter "gegenüber Säureanhydridgruppen reaktionsfähige Wasserstoffatome aufweisenden Oxazolanen" sind im Rahmen der Erfindung vor allem Oxazolane zu verstehen, die primäre oder sekundäre Aminogruppen oder Hydroxylgruppen aufweisen, beispielsweise Monooxazolane der oben genannten allgemeinen Formel, für welche $R_8$ für Wasserstoff oder einen Hydroxyl- oder Aminogruppen aufweisenden Kohlenwasserstoffrest steht. Darüberhinaus soll der Begriff jedoch auch Gemische von Oxazolanen mit überschüssigen Mengen an Hydroxyaminen der zur Herstellung der Oxazolane eingesetzten Art umfassen und zwar unabhängig davon, ob die in diesen Gemischen vorliegenden Oxazolane selbst noch freie Hydroxyl- oder primäre bzw. sekundäre Aminogruppen aufweisen.

Derartige Gemische entstehen automatisch dann, wenn zur Herstellung der Oxazolane, bezogen auf die Carbonylgruppen der Aldehyde bzw. Ketone, höher als bezüglich der Oxazolanbildung äquivalente Mengen an Hydroxyaminen eingesetzt werden.

Die Durchführung des erfindungsgemäßen Verfahrens kann beispielsweise dergestalt erfolgen, daß man ein Gemisch aus den Ausgangskomponenten A) und B)herstellt, wobei im Falle der Verwendung von Oxazolanen mit freien Hydroxyl- und/oder primären bzw. sekundären Aminogruppen diese reaktiven Gruppen spontan mit einem Teil der Komponente A) unter Bildung von Ester- und/oder Amidgruppen aufweisenden Umsetzungsprodukten abreagieren, wobei, wie oben ausgeführt, die freien Hydroxyl- und Aminogruppen sowohl in Form von Oxazolanen mit chemisch gebundenen Hydroxyl- und Aminogruppen als auch in Form von Hydroxyaminen, die mit den Oxazolanen im Gemisch vorliegen, vorliegen können.

Bei allen Varianten des erfindungsgemäßen Verfahrens werden Art und Mengenverhältnisse der Ausgangsmaterialien so gewählt, daß unter Einbeziehung der evtl. spontan zwischen Säureanhydridgruppen und freien Amino- bzw. Hydroxylgruppen ablaufenden Reaktion in den letztendlich erhaltenen Bindemittelkombinationen für jede Oxazolangruppe 0,25 bis 10, vorzugsweise 0,5 bis 5 und besonders bevorzugt 0,6 bis 2,5 Anhydridgruppen vorliegen.

Unter "Oxazolangruppen" sind in diesem Zusammenhang und auch vorstehend nicht nur Struktureinheiten der allgemeinen Formel

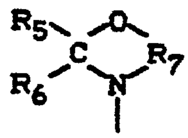

sondern auch Imin- oder Enamin-Struktureinheiten zu verstehen, die in gewissen Fällen im tautomeren Gleichgewicht mit den eigentlichen Oxazolanstruktureinheiten vorliegen können. Der Umstand, daß bestimmte Oxazolane mit Iminen bzw. Enaminen tautomere Gleichgewichte bilden, ist bezüglich der Eignung der Oxazolane als Härterkomponente für die Copolymerisate irrelevant, so daß unabhängig davon, ob und in welchem Umfang derartige tautomere Gleichgewichte vorliegen, die betreffenden Verbindungen bzw. Verbindungsgemische als "Oxazolane" bezeichnet werden. Bei den oben gemachten Mengenangaben steht der Begriff "Oxazolangruppen" auch stellvertretend für evtl. vorliegende tautomere Imin- oder Enamingruppen.

Gemäß einer bevorzugten Ausführungsform des erfindungsgemäßen Verfahrens werden als Komponente B) solche Oxazolane eingesetzt, die keine gegenüber Säureanhydridgruppen reaktionsfähigen Wasserstoffatome aufweisen. In diesem Falle resultieren als Verfahrensprodukte Gemische, die 50 die 97, vorzugsweise 60 bis 95, und insbesondere 70 bis 93 Gew.-Teile der Komponente A) und 3 bis 50, vorzugsweise 5 bis 40, und insbesondere 7 bis 30 Gew.-Teile der Komponente B) enthalten.

Falls als Komponente B) Oxazolane (mit)verwendet werden, die gegenüber Säureanhydridgruppen reaktionsfähige Wasserstoffatome insbesondere in Form von primären oder sekundären Aminogruppen bzw. in Form von Hydroxylgruppen aufweisen, resultieren als Verfahrensprodukte komplexe Gemische, in denen Amid- oder Estergruppen aufweisende Umsetzungsprodukte der Copolymerisate A) mit den reaktionsfähigen Oxazolanen B) vorliegen. Neben diesen Umsetztungsprodukten können in diesen Verfahrensprodukten auch noch überschüssige, nicht umgesetzte Copolymerisate A) oder gegebenenfalls mitverwendete, gegenüber Säureanhydridgruppen inerte Oxazolane B) vorliegen. Bei den genannten, Amid- oder Estergruppen aufweisenden Umsetzungsprodukten kann es sich sowohl um oxazolangruppenaufweisende Umsetzungsprodukte (Umsetzungsprodukte aus Copolymerisaten A) mit Oxazolanen mit chemisch gebundenen aktiven Wasserstoffatomen) als auch um oxazolangruppenfreie Umsetzungsprodukte (Umsetzungsprodukte von Copolymerisaten A) mit gegebenenfalls im Gemisch mit den Oxazolanen vorliegenden Hydroxyaminen) handeln. Bezüglich der Eignung der erfindungsgemäßen Verfahrensprodukte für die erfindungsgemäße Verwendung ist deren genaue Zusammensetzung jedoch weitgehend irrelevant, vorausgesetzt, das Äquivalentverhältnis zwischen Säureanhydridgruppen und Oxazolangruppen liegt innerhalb der oben genannten Grenzen. Bezüglich der Verwendbarkeit der erfindungsgemäßen Verfahrensprodukte ist es außerdem weitgehend ohne Bedeutung, ob die gegebenenfalls spontan ablaufende Reaktion zwischen den Copolymerisaten A) und den gegenüber Säureanhydritgruppen reaktionsfähigen Gruppen der Komponente B) bereits vollständig zum Abschluß gekommen ist. Gewünschtenfalls ist es jedoch möglich, diese Reaktion vor der erfindungsgemäßen Verwendung der Verfahrensprodukte durch kurzzeitiges Erhitzen auf 40 bis 100°C zum Abschluß zu bringen. Im übrigen erfolgt die Durchführung des erfindungsgemäßen Verfahrens durch Abmischung der Einzelkomponenten A) und B) vorzugsweise bei Raumtemperatur.

Bei der Durchführung des erfindungsgemäßen Verfahrens können selbstverständlich jeweils beliebige Gemische unterschiedlicher Einzelkomponenten A) und B) zur Anwendung gelangen.

Die erfindungsgemäßen Verfahrensprodukte können vor, während oder nach ihrer Herstellung durch Vermischen der Einzelkomponenten inerte organische Lösungs-bzw. Verdünnungsmittel der oben bereits beispielhaft genannten Art zugegeben werden. Gegebenenfalls können diese Lösungs- bzw. Verdünnungsmittel auch schon während der Herstellung einer oder mehrerer Ausgangskomponenten zugegen sein, wie dies z.B. vorstehend bei der Herstellung der erfindungsgemäßen bernsteinsäureanhydridhaltigen Copolymerisate beschrieben ist. Die Lösungs- bzw. Verdünnungsmittel sollten weitgehend wasserfrei sein, um eine ausreichende Verarbeitungszeit der Gemische sicherzustellen. Lösungs- bzw. Verdünnungsmittel werden im allgemeinen in solchen Mengen mitverwendet, die zur Einstellung von geeigneten Verarbeitungsviskositäten der erfindungsgemäßen Kombinationen erforderlich sind. Der Festgehalt der der erfindungsgemäßen Verwendung zuzuführenden erfindungsgemäßen Kompositionen liegt in der Regel zwischen 20 und 90 Gew.-%.

Durch Verwendung geeigneter niedermolekularer bernsteinsäureanhydridhaltiger Copolymerisate ist es jedoch auch prinzipiell möglich, den Lösungs- bzw. Verdünnungsmittelgehalt noch weiter zu reduzieren.

Die erfindungsgemäßen Verfahrensprodukte sind im allgemeinen bei Raumtemperatur flüssig, sie sind in Abwesenheit von Wasser ausreichend lagerstabil und härten nach Applikation auf ein Substrat in Gegenwart von Luftfeuchtigkeit im allgemeinen rasch aus.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130°C und Trocknungszeiten von 10 bis 30 Minuten vorteilhaft.

Bei Verwendung von besonders hydrolysestabilen Oxazolanen kann diese forcierte Trocknung bei höheren Temperaturen erforderlich sein, um das optimale Eigenschaftsbild zu erhalten.

Die der erfindungsgemäßen Verwendung zuzuführenden, die erfindungsgemäßen Verfahrensprodukte als Bindemittel enthaltenden Lacke und Beschichtungsmassen können die in der Lacktechnologie üblichen Hilfs- und Zusatzstoffe, wie beispielsweise Pigmente, Füllstoffe, Verlaufshilfsmittel, Antioxidantien oder UV-Absorber enthalten.

Diese Hilfs- und Zusatzstoffe sollten möglichst wasserfrei sein und werden vorzugsweise bereits vor der Durchführung des erfindungsgemäßen Verfahrens den Ausgangskomponenten im allgemeinen der Komponenten A) einverleibt.

Die, die erfindungsgemäßen Verfahrensprodukte als Bindemittel enthaltenden Lacke und Beschichtungsmassen weisen in Abwesenheit von Feuchtigkeit im allgemeinen eine Topfzeit von 1 bis 24 Stunden auf. Durch Auswahl geeigneter Reaktionspartner kann die Topfzeit jedoch beliebig nach oben oder unten korrigiert werden. Die Lacke und Beschichtungsmassen können nach den üblichen Methoden, beispielsweise durch Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe oder Papier aufgetragen werden.

In den nachfolgenden Beispielen beziehen sich alle Prozentzahlen und -teile falls nicht anders vermerkt, auf das Gewicht.

## Beispiele

### I) Herstellung der bernsteinsäureanhydridgruppenhaltigen Copolymerisate

$A_1$

In einem 4-l-Reaktionsgefäß mit Rühr-, Kühl- und Heizvorrichtung werden 1248 g Butylacetat vorgelegt und auf 125°C aufgeheizt. In 3 Stunden werden 262,5 g Maleinsäureanhydrid sowie 300 g Styrol, 525 g Butylacrylat, 97,5 g 2-Ethylhexylacrylat, 90 g Ethylacrylat, 150 g Butylvinylether, 75 g Vinyltoluol und 7,5 g n-Dodecylmercaptan zudosiert. Parallel dazu werden in 4 Stunden 76,6 g tert.-Butylperoxy-2-ethylhexanoat, 70 %ig in Kohlenwasserstoffgemisch, zudosiert. Anschließend wird 2 Stunden bei 125°C gerührt und nochmals 4,3 g 70 %iges tert.-Butylperoxy-2-ethylhexanoat zugegeben. Nach weiteren 2 Stunden wird der Ansatz im Wasserstrahlvakuum andestilliert. Das Copolymerisat hat einen Gehalt an Bernsteinsäureanhydridgruppen von 16,8 %, die Copolymerisatlösung einen Festgehalt von 56,7 % und eine Viskosität von 904 mPa.s (gemessen bei 23°C).

$A_2$

In einem 4-l-Reaktionsgefäß mit Rühr-, Kühl- und Heizvorrichtung werden 1254 g Butylacetat vorgelegt und auf 122°C aufgeheizt. In 3 Stunden werden 127,5 g Maleinsäureanhydrid, sowie 225 g Styrol, 322,5 g Butylacrylat, 450 g Ethylacrylat, 225 g Methylmethacrylat, 75 g Acrylnitril, 75 g Vinylacetat und 15 g n-Dodecylmercaptan zudosiert.

Parallel dazu werden in 4 Stunden 76,6 g tert.-Butylperoxy-2-ethylhexanoat, 70 %ig in Kohlenwasserstoffgemisch, zudosiert. Anschließend wird noch 2 Stunden bei 122°C gehalten und nochmals 4,3 g tert.-Butylperoxy-2-ethylhexanoat zugegeben. Nach weiteren 2 Stunden wird im Wasserstrahlvakuum andestilliert. Das Copolymerisat hat einen Gehat an Bernsteinsäureanhydridgruppen von 8,1 %, die Copolymerisatlösung einen Festgehalt von 57,0 % und eine Viskosität von 1190 mPa.s (gemessen bei 23°C).

$A_3$

In einem 2-l-Reaktionsgefäß mit Rühr, Kühl- und Heizvorrichtung werden 737,5 g Methoxypropylacetat vorgelegt und auf 145°C aufgeheizt. Dann werden in 3 Stunden 262,5 g Maleinsäureanhydrid, sowie 262,5 g Styrol, 225 g 2-Ethylhexylacrylat und 3,75 g tert.-Dodecylmercaptan zudosiert. Parallel dazu werden in 4 Stunden 22,5 g Di-tert.-butylperoxid und 38,8 g Methoxypropylacetat zudosiert. Nach einer weiteren Stunde werden nochmals 1,6 g Di-tert.-butylperoxid zugegeben und 2 Stunden bei 145°C gerührt. Das Copolymerisat hat einen Gehalt an Bernsteinsäureanhydridgruppen von 33,7 %, die Copolymerisatlösung einen Feststoffgehalt von 52,4 % bei einer Viskosität von 5210 mPa.s (gemessen bei 23°C).

$A_4$

In einem 4-l-Reaktionsgefäß mit Rühr-, Kühl- und Heizvorrichtung werden 1200 g Methoxypropylacetat vorgelegt und auf 130°C aufgeheizt. In 3 Stunden werden 375 g Maleinsäureanhydrid sowie 675 g 2-Ethylhexylacrylat, 450 g Styrol und 1,5 g n-Dodecylmercaptan zudosiert. Parallel dazu werden in 4 Stunden 42,9 g tert.-Butyl peroxy-2-ethylhexanoat, 70 %ig in Kohlenwasserstoffgemisch gelöst, und 40,1 g Methoxypropylacetat zudosiert. Anschließend wird 1 Stunde bei 130°C gehalten und dann auf einen Festgehalt von 58,9 % andestilliert. Das Copolymerisat hat einen Gehalt an Bernsteinsäureanhydridgruppen von 24,5 %, die Copolymerisatlösung hat bei 23°C eine Viskosität von 32 900 mPa.s.

$A_5$

In einem 6-l-Reaktionsgefäß mit Rühr-, Kühl- und Heizvorrichtung werden 2000 g Methoxypropylacetat vorgelegt und auf 130°C erhitzt. In 3 Stunden werden 1125 g Butylacrylat, 750 g Styrol, sowie 625 g Maleinsäureanhydrid zudosiert. Parallel dazu werden in 4 Stunden 50 g Azodiisobutyronitril und 550 g Methoxypropylacetat zudosiert. Nach 2 Stunden Rühren werden in Abständen von 45 Minuten zweimal noch jeweils 5 g Azodiisobutyronitril zugegeben und 2 Stunden nachgerührt. Anschließend wird auf einen Festgehalt von 57,0 % andestilliert. Die Copolymerisatlösung hat dann bei 23°C eine Viskosität von 12 500 mPa.s. Das Copolymerisat hat einen Gehalt an Bernsteinsäureanhydridgruppen von 24,4 %.

$A_6$

In einem 4-l-Reaktionsgefäß mit Rühr-, Kühl- und Heizvorrichtung werden 500 g Butylacetat vorgelegt und auf 120°C aufgeheizt. In 3 Stunden werden 187,5 g Maleinsäureanhydrid, sowie 187,5 g Styrol und 1125 g Butylacrylat zudosiert. Parallel dazu werden in 4 Stunden 37,5 g Azodiisobutyronitril und 525 g Butylacetat zudosiert und noch 1 Stunde gerührt. Anschließend werden 3 mal je 3 g Azodiisobutyronitril zugegeben und nochmals 2 Stunden gerührt. Nach Andestillieren auf einen Festgehalt von 65,4 % erhält man eine Copolymerisatlösung mit einer Viskosität bei 23°C von 1370 mPa.s. Das Copolymerisat hat einen Gehalt an Bernsteinsäureanhydridgruppen von 12,1 %.

$A_7$

In einem 6-l-Reaktionsgemäß mit Rühr-, Kühl- und Heizvorrichtung werden 1190 g Butylacetat vorgelegt und auf 124°C erhitzt. In 4 Stunden werden 330 g Styrol, 1320 g Butylacrylat, 225 g Methylmethacrylat, sowie 275 g Maleinsäureanhydrid, gelöst in 644 g Butylacetat, zudosiert. Parallel dazu werden in 5 1/2 Stunden 110 g tert.-Butylperoxy-2-ethylhexanoat, 70 %ig in Kohlenwasserstoffgemisch, zudosiert. Anschließend wird noch 1 Stunde bei 124°C gehalten und dann 6,4 g tert.-Butylperoy-2-ethylhexanoat in 2 Portionen zugegeben. Nach weiteren 2 Stunden wird im Wasserstrahlvakuum andestilliert. Die Copolymerisatlösung hat einen Festgehalt von 57,4 % und eine Viskosität von 956 mPa.s (gemessen bei 23°C). Das Copolymerisat hat einen Gehalt an Bernsteinsäureanhydridgruppen von 12,3 %.

$A_8$

In einem 6-l-Reaktionsgefäß mit Rühr-, Kühl- und Heizvorrichtung werden 1038 g Butylacetat vorgelegt und aus 126°C aufgeheizt. In 4 Stunden werden 1250 g Butylacrylat, 250 g 2-Ethylhexylacrylat, 300 g Methylmethacrylat, 375 g Styrol, sowie 325 g Maleinsäureanhydrid, gelöst in 975 g Butylacetat, zudosiert. Parallel dazu werden in 5 Stunden 110 g tert.-Butylperoxy-2-ethylhexanoat, 70 %ig in Kohlenwasserstoffgemisch, zudosiert. Nach 1 Stunde bei 126°C werden nochmals 7,2 g tert.- Butylperoxy-2-ethylhexanoat zugegeben und 2 Stunden nachgerührt. Nach kurzem Andestillieren erhält man eine 63,6 %ige Copolymerisatlösung mit einer Viskosität von 2280 mPa.s (23°C). Das Copolymerisat hat einen Gehalt an Bernsteinsäureanhydridgruppen von 12,6 %.

$A_9$

In einem 4-l-Reaktionsgemäß mit Rühr-, Kühl- und Heizvorrichtung werden 800 g Butylacetat vorgelegt und auf 110°C aufgeheizt. In 2 Stunden werden 658 g Methylmethacrylat, 213 g Styrol, 600 g Butylacrylat, 284 g Maleinsäureanhydrid und 250 g Butylacetat zudosiert. Parallel dazu werden 105 g tert.-Butylperoxy-2-ethylhexanoat, 70 %ig in Kohlenwasserstoffgemisch und 90 g Butylacetat zugegeben. Nach 3 Stunden Nachrühren bei 110°C erhält man eine 60,1 %ige Copolymerisatlösung mit einer Viskosität von 10 790 mPa.s (23°C). Das Copolymerisat hat einen Gehalt an Bernsteinsäureanhydridgruppen von 12,6 %.

$A_{10}$

Man verfährt wie in Beispiel A9 angegeben unter Benutzung der gleichen Monomeren und stellt eine Copolymerisatlösung ca. 60 %ig in Butylacetat her, in der die Monomeren in folgendem Gewichtsverhältnis vorliegen: 164,1 g Methylmethacrylat, 524,1 g Butylacrylat, 116,5 g Styrol, 155,4 g Maleinsäureanhydrid und 39,9 g t-Butylperoxy-2-ethylhexanoat. Die Lösung hat eine Viskosität von 3766 mPa.s bei 23°C. Das Copolymerisat hat einen Gehalt an Bernsteinsäureanhydridgruppen von 15,7 %.

$A_{11}$

Man verfährt wie in Beispiel A9 angegeben und stellt eine ca. 60 %ige Copolymerisatlösung in Butylacetat her, die folgende Zusammensetzung hat:
36,00 Gew.-% Methylmethacrylat
32,82 Gew.-% Butylacrylat
11,65 Gew.-% Styrol
15,54 Gew.-% Maleinsäureanhydrid
3,99 Gew.-% t-Butylperoctoat
Die Lösung hat eine Viskosität von 10 791 mPa.s (bei 23°C).

$A_{12}$

Man verfährt wie in Beispiel A9 und stellt eine Copolymerisatlösung folgender Zusammensetzung her:
24,62 Gew.-% Methylmethacrylat
36,93 Gew.-% Butylacrylat
14,77 Gew.-% Styrol
19,69 Gew.-% Maleinsäureanhydrid
3,99 Gew.-% t-Butylperoctoat
Die Lösung hat ca. 60 %ig in Butylacetat eine Viskosität von 14 061 mPa.s bei 23°C.

$A_{13}$

Man verfährt wie in Beispiel A9 angegeben und stellt aus den gleichen Monomeren eine ca. 60 %ige Copolymerisatlösung in Xylol folgender Zusammensetzung her:
38,25 Gew.-% Butylacrylat
29,50 Gew.-% Methylmethacrylat
13,66 Gew.-% Styrol
14,59 Gew.-% Maleinsäureanhydrid
4,00 Gew.-% t.-Butylperoctoat
Viskosität der Lösung: 9489 mPa.s (23°C).

$A_{14}$

Man verfährt wie in Beispiel A8 angegeben und stellt eine 56,4 %ige Copolymerisatlösung in Butylacetat mit folgender Zusammensetzung her:
16,50 Gew.-% Maleinsäureanhydrid
13,59 Gew.-% Styrol
26,22 Gew.-% Methylmethacrylat
40,78 Gew.-% Butylacrylat
2,91 Gew.-% tert.-Butylperoxy-2-ethylhexanoat
Viskosität der Lösung: 1090 mPa.s (23°C).

$A_{15}$

Man verfährt wie in Beispiel A8 angegeben und stellt eine 49,0 %ige Copolymerisatlösung in Butylacetat mit folgender Zusammensetzung her:
15,00 Gew.-% Maleinsäureanhydrid
13,50 Gew.-% Styrol
34,50 Gew.-% Butylacrylat
34,00 Gew.-% Methylmethacrylat
3,00 Gew.-% tert.-Butylperoxy-2-ethylhexanoat.
Viskosität der Lösung: 971 mPa.s (23°C)

II) Herstellung der Oxazolane B

Allgemeine Herstellvorschrift:

Zur Herstellung der Oxazolone werden die Hydroxyamine, die Carbonylverbindungen und gegebenenfalls das Schleppmittel gemischt und gegebenenfalls mit 0,01 bis 0.1 % eines sauren Katalysators versetzt. Unter Inertgasatmosphäre (z.B. $N_2$, Ar) wird am Wasserabscheider solange unter Rückfluß erhitzt, bis die theoretische Wassermenge abgetrennt ist, bzw. bis keine weitere Wasserabscheidung mehr erfolgt. Die so erhaltenen Produkte können ohne weitere Reinigungs- oder Trennungsschritte für die erfindungsgemäßen Kombinationen eingesetzt werden. Werden besonders hohe Anforderungen an die Reinheit bzw. Einheitlichkeit der Produkte gestellt, so können diese auch z.B. durch eine Vakuumdestillation gereinigt werden.

$B_1$

Aus 150 g 2-(Methylamino)-ethanol, 142,4 g Isobutyraldehyd und 77,1 g Xylol erhält man nach Abscheiden von 35,9 g Wasser (theoretische Menge: 36 g) das rohe Oxazolan $B_1$.

$B_2$

Aus 210 g Diethanolamin, 158,4 g Isobutyraldehyd und 92,1 g Xylol erhält man nach Abscheiden von 34,2 g Wasser (theoretische Menge: 36 g) das rohe Oxazolan $B_2$.

$B_3$

Aus 150 g 2-(Methylamino)-ethanol, 281,6 g 2-Ethylhexanal und 107,9 g Xylol erhält man nach Abscheiden von 36,1 g Wasser (theoretische Menge: 36 g) das rohe Oxazolan $B_3$.

$B_4$

Aus 122 g 2-Aminoethanol, 158,4 g Isobutyraldehyd und 70,1 g Xylol erhält man nach Abscheiden von 36,6 g Wasser (theoretische Menge: 36 g) das rohe Oxazolan $B_4$.

$B_5$

Aus 122 g 2-Aminoethanol, 215,6 g Cyclohexanon und 84,4 g Xylol erhält man nach Abscheiden von 46 g Wasser (theoretische Menge: 36 g) das rohe Oxazolan $B_5$.

$B_6$

Aus 210 g Diethanolamin, 215,6 g Cyclohexanon und 106,4 g Cyclohexan erhält man nach Abscheiden von 44 g Wasser (theoretische Menge: 36 g) das rohe Oxazolan $B_6$.

$B_7$

Aus 210 g Diethanolamin, 281,6 g 2-Ethylhexanal und 122,9 g Cyclohexan erhält man nach Abscheiden von 35 g Wasser (theoretische Menge: 36 g) das rohe Oxazolan $B_7$.

$B_8$

Aus 150 g 2-(Methylamino)-ethanol, 196 g Cyclohexanon und 91,4 g Xylol erhält man nach Abscheiden von 39 g Wasser (theoretische Menge: 36 g) das rohe Oxazolan $B_8$.

$B_9$

Aus 178 g 2-Amino-2-methyl-1-propanol, 215,6 g Cyclohexanon und 98 g Xylol erhält man nach Abscheiden von 41,3 g Wasser (theoretische Menge: 36 g) das rohe Oxazolan $B_9$.

$B_{10}$

Aus 150 g 2-(Methylamino)-ethanol, 176,4 g Cyclohexanon und 91,4 g Cyclohexan erhält man nach Abscheiden von 30 g Wasser (theoretische Menge: 36 g) das rohe Oxazolan $B_{10}$.

$B_{11}$

Aus 266 g Bis-(2-hydroxypropyl)-amin, 256 g 2-Ethylhexanal und 137 g Cyclohexan erhält man nach Abscheiden von 35,5 g Wasser (theoretische Menge: 36 g) das rohe Oxazolan $B_{11}$.

$B_{12}$

Aus 210 g 2-Amino-2-methyl-1,3-propandiol, 158,4 g Isobutyraldehyd und 92 g Cyclohexan erhält man nach Abscheiden von 39,9 g Wasser (theoretische Menge: 36 g) das rohe Oxazolan $B_{12}$.

$B_{13}$

Aus 178 g 2-Amino-2-methyl-1-propanol, 252 g Pivaldehyd und 108 g Cyclohexan erhält man nach Abscheiden von 42,7 g Wasser (theoretische Menge: 36 g) das rohe Oxazolan $B_{13}$.

$B_{14}$

Aus 159 g (1 Mol) des Oxazolans $B_2$, das vorher durch Vakuumdestillation gereinigt wurde und 84 g (0,5 Mol) Hexamethylendiisocyanat wird wie in DE-OS 2 446 438, Beispiel 3 beschrieben das Bis-oxazolan

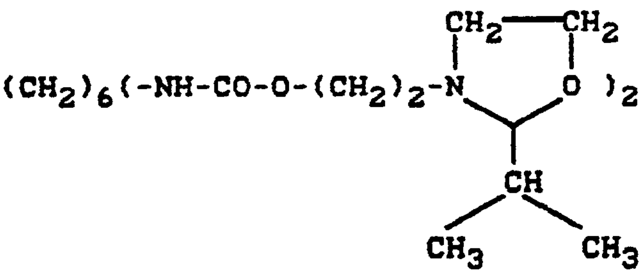

hergestellt und in einem Gemisch von Xylol und n-Butylacetat (Gewichtsverhältnis 1:1) 50 %ig aufgelöst.

$B_{15}$

Aus 159 g (1 Mol) des gereinigten Oxazolans B2 und 87 g (0,5 Mol) Adipinsäuredimethylester wird durch Umesterung und Abspaltung von Methanol bei 150 bis 180°C das Bis-oxazolan

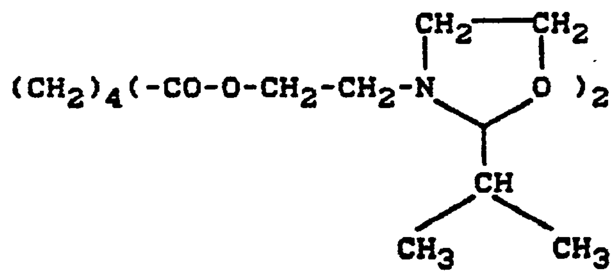

hergestellt. Für die Anwendung als Reaktionspartner für Anhydridgruppen enthaltende Copolymerisate wird das Produkt 50 %ig in Butylacetat aufgelöst.

$B_{16}$

Aus 100 g eines Isocyanuratgruppen enthaltenden Polyisocyanates das man durch Teiltrimerisierung der NCO-Gruppen des Hexamethylendiisocyanats nach EP-A-10589 hergestellt hat und das einen NCO-Gehalt von 21,4 Gew.-% hat und 97 g Oxazolan B2 (ca. 20 Mol-% Überschuß) stellt man ein Poly-oxazolan her, analog DE-OS 2 446 438. Das hochviskose Produkt wird 60 %ig in Butylacetat aufgelöst. Die Lösung hat eine Viskosität von 200 mPa.s bei 23°C.

$B_{17}$

Aus 210 g (2 Mol) 2-Amino-2-methyl-1,3-propandiol, 158,4 g Isobutyraldehyd (2,2 Mol) und 92,1 g Cyclohexan stellt man ein Oxazolan her. Nach Abdestillieren von überschüssigem Isobutyraldehyd und Cyclohexan wird das Produkt mit 229,9 g Dimethyldiglykol verdünnt. Bei 60°C werden dann 168 g (1 Mol) Hexamethylendiisocyanat zugetropft und die Reaktionsmischung 6 Stunden gerührt. Man erhält eine 70 %ige Lösung des Bisoxazolans $B_{17}$.

$B_{18}$

Man legt 100,8 g Hexamethylendiisocyanat und 217,2 g Butylacetat vor und tropft bei 60°C 95,4 g Oxazolan $B_2$ zu und rührt noch 6 Stunden. Anschließend tropft man 21 g Diethanolamin zu und rührt noch 6 Stunden bei 80°C. Man erhält eine ca. 50 %ige Lösung des Polyoxazolans $B_{17}$ welches Urethan- und Harnstoffgruppen enthält.

$B_{19}$

536 g Trimethylolpropan, 1368 g ε-Caprolacton, 476 g Dimethyldiglykol und 0,4 g eines Veresterungskatalysators (Zinn-dioctoat) werden zusammen 4 h auf 140°C erhitzt. 297,5 g des so hergestellten Trime-

thylolpropan/ε-Caprolacton-Adduktes und 265,0 g Oxazolan $B_2$ werden zusammen auf 50°C erwärmt. Nach dem Zutropfen von 252 g Hexamethylendiisocyanat wird noch 6 Stunden bei 70°C gerührt. Nach Zugabe von 113 g Dimethyldiglykol erhält man das Polyoxazolan $B_{19}$ als 70 %ige Lösung.

$B_{20}$

672 g Hexamethylendiisocyanat und 345,4 g Butylacetat werden auf 64°C erwärmt und dann mit 134 g Trimethylolpropan versetzt. Nach 10 Stunden bei 70°C war der NCO-Gehalt auf 18,6 % abgefallen. 285,7 g dieses 70 %igen NCO-Prepolymeren werden mit 96,2 g Butylacetat verdünnt. Bei 60°C werden dann 202 g Oxazolan $B_2$ zugetropft und noch 6 Stunden bei 70°C gerührt. Man erhält eine ca. 70 %ige Lösung des Polyoxazolans $B_{20}$.

$B_{21}$

126 g 3,4-Epoxycyclohexylmethyl-3',4'-epoxycyclohexancarboxylat (Diepoxid 126, Degussa AG) und 71,4 g Toluol werden auf 50°C erwärmt. Dann werden 36,5 g n-Butylamin und 44 g 1-Amino-3-methylaminopropan zugetropft und dabei die Temperatur auf 110°C gesteigert. Nach 3 Stunden wird auf 50°C abgekühlt und 79,2 g Isobutyraldehyd zugetropft, auf Rückflußtemperatur erhöht und auf 18,5 g Wasser (Theorie: 18 g) abgespalten. Man erhält das Polyoxazolan $B_{21}$.

III) Herstellung der Vergleichspolyanhydride

Zu Vergleichszwecken wurden aus DE-OS 2 610 406, Beispiel 8 und Beispiel 9 nachgestellt.

A (V) 22 (entspricht Beispiel 9 der DE-OS 2 610 406)

In einem 3-l-Reaktionsgefäß mit Rühr-, Kühl- und Heizvorrichtung und Wasserabscheider werden 600 g Xylol vorgelegt und auf 139°C erwärmt. In 3 1/4 Stunden werden 225 g Maleinsäureanhydrid, 1275 g Butylacrylat und 60 g 75 %iges t.-Butylperacetat zudosiert. Nach weiteren 15 Minuten wurden nochmals 6 g 75 %iges t.-Butylperacetat und 40 g Xylol zugegeben. Das so erhaltene Produkt hat bei einem Festkörpergehalt von 74,0 % eine Viskosität von 402 mPa.s/23°C.

A (V) 23 (entspricht Beispiel 8 der DE-OS 2 610 406)

In einem 3-l-Reaktionsgefäß mit Rühr-, Kühl und Heizvorrichtung und Wasserabscheider werden 338,6 g Toluol, 142,5 g Butylacylat, 22,5 g Maleinsäureanhydrid und 0,5 g t.-Butylperoctoat vorgelegt und auf 114°C aufgeheizt. Nach 15 Minuten bei 114°C wurden 757,5 g Butylacrylat, 77,5 g Maleinsäureanhydrid und 2,5 g t.-Butylperoctoat in 2 3/4 Stunden zudosiert. Nach weiteren 15 Minuten wurden 3 g t.-Butylperoctoat und 97 g Toluol zugegeben. Das so erhaltene Produkt hat bei einem Festkörper von 75 % eine Viskosität von 3710 mPa.s/23°C.

IV) Herstellung der erfindungsgemäßen Bindemittelkompositionen

Die bernsteinsäureanhydridgruppenhaltigen Copolymerisate A und die Oxazolane B werden bei Raumtemperatur miteinander vermischt und gegebenenfalls durch Zugabe eines organischen Lösungs- bzw. Verdünnungsmittels auf eine verarbeitungsfähige Viskosität eingestellt. Die Filme werden mit einem Filmzieher auf Glasplatten aufgezogen, wobei die Filmstärke der Naßfilme 120 bis 150 µm beträgt. Nach Alterung, d.h. 16 bis 20 Stunden Lagerung bei Raumtemperatur (RT), bzw. 30 Min/60°C + 1 Stunde Raumtemperaturtrocknung bzw. 20 Min/100°C + 1 Stunde Raumtemperaturtrocknung erhält man klare, vernetzte Filme mit sehr guter Filmmechanik.

In Abhängigkeit von der Hyrdolysenstabilität der Oxazolane ist es angebracht, durch einen Vorversuch die für eine optimale Vernetzung erforderliche Härtungsbedingungen wie z.B. 1 Stunde/Raumtemperatur oder 30 Min/60°C + 1 Stunde Raumtemperatur oder 20 Min/100°C + 1 Stunde Raumtemperatur zu ermitteln.

In den folgenden Tabellen werden die Zusammensetzungen der Bindemittelkombinationen, Trocknungstemperaturen, Standzeit und außerdem die Lösungsmittelfestigkeit als Grad der Vernetzung aufgeführt.

Die Lösungsmittelfestigkeit wird durch Auflegen von mit Methylisobutylketon (MIBK) bzw. Xylol bzw. Butylacetat getränkten Wattebäuschen ermittelt. Nach jeweils 1 Minute Belastung wird der Film auf sichtbare Veränderungen geprüft.

Die Bewertungsskala reicht dabei von 1 bis 5, wobei 1 steht für: ohne Befund und 5 steht für: völlig abgelöst.

Als Standzeit ist der Zeitraum angegeben, in der sich die Anfangsviskosität der Bindemittelkomposition verdoppelt.

Der Festgehalt der Bindemittelzusammensetzungen wurde rechnerisch ermittelt, und zwar auf Grundlage der experimentell bestimmten Feststoffgehalte der bernsteinsäureanhydridgruppenhaltigen Copolymerisate und der berechneten Festgehalte der Oxazolane.

Die Filme aus den erfindungsgemäßen Bindemittelkompositionen trocknen bei Raumtemperatur alle nach spätestens 1 Stunde klebfrei auf. Die Vergleichsbeispiele V 28, V 29 ergaben selbst nach 24 Stunden Trocknung bei Raumtemperatur noch klebrige Filme, die zudem noch gelblich gefärbt waren und nur sehr geringe Lösungsmittelfestigkeiten erreichten.

**Tabelle 1** (Beispiele)

| | 1 | 2 | 3 | 4 | 5 | 6 |
|---|---|---|---|---|---|---|
| bernsteinsäureanhydridgruppenhaltiges Copolymerisat | 70 g $A_1$ | 70 g $A_2$ | 70 g $A_3$ | 70 g $A_4$ | 70 g $A_5$ | 70 g $A_6$ |
| Oxazolan | 8,8 g $B_2$ | 8,8 g $B_2$ | 8,1 g $B_2$ | 9,1 g $B_2$ | 8,8 g $B_2$ | 10,1 g $B_2$ |
| Molverhältnis[1)] | 1,5:1 | 1,3:1 | 3,1:1 | 2,2:1 | 1,1:1 | 1,6:1 |
| Festgehalt der Bindemittelkomposition | 59,6 % | 59,3 % | 53,5 % | 55,0 % | 56,0 % | 67,2 % |
| Anfangsviskosität (mPa.s) | 900 | 700 | 2510 | 3140 | 3870 | 770 |
| Standzeit (Stunden) | 1 | 1 | 1 | 1 | 1 | 2 |
| Trocknungsbedingungen | 16 Std/RT | 16 Std/RT | 16 Std/RT | 16 Std/RT | 16 Std/RT | 16 Std/RT |
| Lösungsmittelfestigkeit (MIBK/Xylol/Butylac.) | 1/1/1 | 1/1/1 | 1/1/1 | 1/1/1 | 1/1/1 | 1/1/1 |
| Aussehen des Films | farblos | farblos | farblos | farblos | farblos | farblos |

1) Molverhältnis von Oxazolangruppen zu Anhydridgruppen

**Tabelle 1** (Beispiele)

| | 7 | 8 | 9 | 10 | 11 | 12 |
|---|---|---|---|---|---|---|
| bernsteinsäureanhydridgruppenhaltiges Copolymerisat | 70 g $A_5$ | 70 g $A_5$ | 70 g $A_6$ | 70 g $A_6$ | 70 g $A_5$ | 70 g $A_5$ |
| Oxazolan | 8,8 g $B_4$ | 8,8 g $B_5$ | 8,7 g $B_6$ | 8,7 g $B_7$ | 8,8 g $B_8$ | 8,8 g $B_9$ |
| Molverhältnis[1)] | 1,6:1 | 2:1 | 1,5:1 | 1,8:1 | 2,2:1 | 2,4:1 |
| Festgehalt der Bindemittelkomposition | 55 % | 55 % | 66,4 % | 66,4 % | 55 % | 55 % |
| Anfangsviskosität (mPa.s) | 6070 | 5020 | 670 | 570 | 2090 | 2110 |
| Standzeit (Stunden) | 3 | 3 | 1 | 2 | 3 | 6 |
| Trocknungsbedingungen | 16 Std/RT | 16 Std/RT | 16 Std/RT | 16 Std/RT | 30'/60° C | 30'/60° C |
| Lösungsmittelfestigkeit (MIBK/Xylol/Butylac.) | 1/1/1 | 1/1/1 | 1/1/1 | 1/1/1 | 1/1/1 | 1/1/1 |
| Aussehen des Films | farblos | spur rosa | farblos | farblos | farblos | farblos |

Tabelle 1 (Beispiele)

| | 13 | 14 | 15 | 16 | 17 | 18 |
|---|---|---|---|---|---|---|
| bernsteinsäureanhydridgruppenhaltiges Copolymerisat | 70 g $A_5$ | 70 g $A_5$ | 70 g $A_5$ | 70 g $A_5$ | 70 g $A_5$ | 70 g $A_5$ |
| Oxazolan | 8,8 g $B_{10}$ | 8,8 g $B_3$ | 8,8 g $B_1$ | 8,8 g $B_{11}$ | 8,8 g $B_{12}$ | 8,8 g $B_{13}$ |
| Molverhältnis[1)] | 2,2:1 | 2,6:1 | 2,0:1 | 3,4:1 | 2,3:1 | 2,3:1 |
| Festgehalt der Bindemittelkomposition | 55 % | 55 % | 55 % | 55 % | 55 % | 55 % |
| Anfangsviskosität (mPa.s) | 2350 | 2720 | 1880 | 2680 | 2780 | 1740 |
| Standzeit (Stunden) | 2 | 2 | 5 | 4 | 1 | 6 |
| Trocknungsbedingungen | 30'/60° C | 30'/60° C | 30'/60° C | 20'/100° C | 20'/100° C | 20'/100° C |
| Lösungsmittelfestigkeit (MIBK/Xylol/Butylac.) | 1/1/1 | 1/1/1 | 1/1/1 | 1/1/1 | 1/1/1 | 1/1/1 |
| Aussehen des Films | farblos | farblos | farblos | farblos | farblos | farblos |

<u>Tabelle 1</u> (Beispiele)

| | 19 | 20 | 21 | 22 | 23 | 24 |
|---|---|---|---|---|---|---|
| bernsteinsäureanhydridgruppenhaltiges Copolymerisat | 70 g $A_6$ | 70 g $A_4$ | 70 g $A_1$ | 70 g $A_2$ | 70 g $A_2$ | 30 g $A_3$/ 34 g $A_6$ |
| Oxazolan | 6,4 g $B_1$ | 12,9 g $B_1$ | 8,8 g $B_1$ | 5,5 g $B_1$ | 8,8 g $B_1$ | 9,8 g $B_1$ |
| Molverhältnis[1)] | 1,7:1 | 1,5:1 | 1,4:1 | 1,1:1 | 0,7:1 | 1,4:1 |
| Festgehalt der Bindemittelkomposition | 66,6 % | 58,0 % | 59,3 % | 58,7 % | 59,3 % | 61,5 % |
| Anfangsviskosität (mPa.s) | 804 | 1980 | 450 | 804 | 450 | 940 |
| Standzeit (Stunden) | 24 | 5 | 8 | 36 | 8 | 3 |
| Trocknungsbedingungen | 16 Std/RT | 16 Std/RT | 16 Std/RT | 16 Std/RT | 16 Std/RT | 16 Std/RT |
| Lösungsmittelfestigkeit (MIBK/Xylol/Butylac.) | 1/1/1 | 1/1/1 | 1/1/1 | 1/1/1 | 1/1/1 | 1/1/1 |
| Aussehen des Films | farblos | farblos | farblos | farblos | farblos | farblos |

**Tabelle 1** (Beispiele + Vergleiche)

| | 25 | 26 | 27 | V28 | V29 |
|---|---|---|---|---|---|
| bernsteinsäureanhydridgruppenhaltiges Copolymerisat | 72 g $A_8$ | 40 g $A_7$ | 74 g $A_9$ | 64,2 g A(V)22 | 70 g A(V)23 |
| Oxazolan | 10,1 g $B_2$ | 5 g $B_2$ | 8,8 g $B_2$ | 8,8 g $B_1$ | 6,5 g $B_1$ |
| Molverhältnis | 1,1:1 | 1,1:1 | 1,6:1 | 1,5:1 | 1,5:1 |
| Festgehalt der Bindemittelkomposition | 65,6 % | 62,2 % | 62,2 % | 74,7 % | 75,4 % |
| Anfangsviskosität (mPa.s) | 1370 | 1120 | 5650 | 122 | 2200 |
| Standzeit (Stunden) | 2 | 3 | 1 | >24 | 12 |
| Trocknungsbedingungen | 16 Std/RT | 16 Std/RT | 16 Std/RT | 16 Std/RT | 16 Std/RT 16 |
| Lösungsmittelfestigkeit (MIBK/Xylol/Butylac.) | 1/1/1 | 1/2/2 | 1/1/1 | 5/5/5 | 4/5/4 |
| Aussehen des Films | farblos | farblos | farblos | gelb nach 24 Std/RT nicht klebfrei | leicht gelb nach 24 Std/RT nicht klebfrei |

**Tabelle 1** (Beispiele + Vergleiche)

| | 30 | 31 | 32 | 33 | 34 |
|---|---|---|---|---|---|
| bernsteinsäureanhydridgruppenhaltiges Copolymerisat | 70 g $A_{14}$ | 100 g $A_{14}$ | 70 g $A_{15}$ | 70 g $A_{15}$ | 70 g $A_{14}$ |
| Oxazolan | 11,8 g $B_{17}$ | 52,7 g $B_{18}$ | 18,6 g $B_{19}$ | 18,8 g $B_{20}$ | 11,1 g $B_{21}$ |
| Molverhältnis | 1,9:1 | 1,3:1 | 2,0:1 | 1,3:1 | 2,1:1 |
| Festgehalt der Bindemittelkomposition | 58,4 % | 54,2 % | 54,2 % | 54,5 % | 59,3 % |
| Anfangsviskosität (mPa.s) | 2010 | 610 | 1610 | 650 | 2210 |
| Standzeit (Stunden) | 8 | 8 | 4 | 4 | 1 |
| Trocknungsbedingungen | 16 Std/RT | 16 Std/RT | 16 Std/RT | 16 Std/RT | 16 Std/RT 16 |
| Lösungsmittelfestigkeit (MIBK/Xylol/Butylacetat/Aceton) | 1/1/1/2 | 1/1/1/2 | 1/1/1/1 | 2/1/1/3 | 1/1/1/1 |
| Aussehen des Films | farblos | farblos | farblos | farblos | farblos |

Beispiele 35 bis 39

Die Beispiele 35 bis 39 sind weitere Beispiele für die erfindungsgemäßen Lackzusammensetzungen und die Beschreibung der resultierenden Eigenschaften der Lackfilme unter verschiedenen Bedingungen. Die Naßfilme werden wie in den vorhergehenden Beispielen der Tabelle I auf saubere, entfettete Glasplatten bzw. auf Stahlplatten, die mit einem Wash-primer auf Basis Polyvinylbutyrat ausgerüstet sind, aufgetragen. Die Dicke der getrockneten Klarlackfilme beträgt 30 bis 45 µm. Die Prüfungen sind auf eine Anwendung der Lackzusammensetzungen als Klarlack für Autoreparaturlacke ausgerichtet.

**<u>Tabelle II</u> (Beispiele)**

| Lacklösungen: | 35 | 36 | 37 | 38 | 39 |
|---|---|---|---|---|---|
| Copolymerisat | 105,0 g A 10 | 105 g A 10 | 105 g A 11 | 82,8 g A 12 | 82,8 g A 12 |
| Oxazolan | 44,5 g B 14 | 40 g B 15 | 44,8 g B 14 | 44,8 g B 14 | 40 g B 15 |
| Molverhältnis | 1,1:1 | 1,1:1 | 1,1:1 | 1,1:1 | 1,1:1 |
| Zusatz von Butylacetat | 62,7 g | 61,0 g | 62,7 g | 51,6 g | 49,0 g |
| Silikonöl als Verlaufmittel (10 %ig in Methoxypropylenglykolacetat) | 1,0 g | 1,0 g | 1,0 g | 1,0 g | 1,0 g |
| Auslaufzeiten (DIN 53211, 4 mm-Düse) 0 h | 15 sec | 14 sec | 18 sec | 27 sec | 18 sec |
| 3 h | 16 sec | 16 sec | 22 sec | 33 sec | 32 sec |
| 6 h | 17 sec | 17 sec | 23 sec | 34 sec | 40 sec |
| 24 h | 17 sec | 19 sec | 28 sec | 37 sec | 68 sec |
| Aussehen der Lösungen | klar farblos | klar farblos | klar farblos | klar farblos | klar farblos |

**Tabelle II** (Beispiele)/Fortsetzung

| Locklösungen: | 35 | 36 | 37 | 38 | 39 |
|---|---|---|---|---|---|
| Trocknung nach DIN 53150 | | | | | |
| $T_1$ (Aufstreuen v. Glasperlen) | <15 min | <15 min | <15 min | <15 min | <15 min |
| $T_3$ (Montagefestigkeit) | <60 min | <60 min | <60 min | <60 min | <60 min |
| Penderhärte nach König (DIN 53157) (nach Lagerung bei 60 % rel. Luftfeuchte) | | | | | |
| 1 Tag 23° C | 114 sec | 103 sec | 130 sec | 145 sec | 148 sec |
| 3 Tage 23° C | 125 sec | 114 sec | 147 sec | 156 sec | 160 sec |
| 5 Tage 23° C | 138 sec | 130 sec | 160 sec | 170 sec | 170 sec |
| 5 Tage 23° C + 3 h 70° C | 137 sec | 130 sec | 158 sec | 165 sec | 167 sec |
| Schichtdicke µm | 40 | 35 | 35 | 45 | 40 |
| Tiefung nach Erichsen (DIN 43156) in mm nach 5 Tagen 23° C | 9,5 | 9,0 | 9,5 | 8,5 | 9,0 |

Tabelle II (Beispiele)/Fortsetzung

| Anlösbarkeit* in Superbenzin | 35 | 36 | 37 | 38 | 39 |
|---|---|---|---|---|---|
| Alter d. Filmes: Einwirkzeit: | | | | | |
| 1 Tag 23° C 1 min | 0 | 1 | 0 | 0 | 0 |
| 1 Tag 23° C 5 min | 2 | 3 | 0 | 0 | 1 |
| Alter d. Filmes: Einwirkzeit: 3 Tage 23° C 5 min (60 % rel. Luftfeuchte) in den Lösemitteln | | | | | |
| Ethylglykolacetat | 1 | 0 | 0 | 0 | 0 |
| Ethylactat | 1 | 0 | 0 | 0 | 0 |
| Toluol | 2 | 2 | 1 | 0 | 0 |
| Aceton | 4 | 4 | 4 | 3 | 3 |
| Superbenzin | 0 | 0 | 0 | 0 | 0 |

*) Die Anlösbarkeit wurde in 5 Stufen gemessen:
0, 1, 2, 3, 4,
0 = Film völlig unverändert
4 = Film löst sich auf

Zusammenfassung der Ergebnisse der Beispiele 35 bis 39:

Die erfindungsgemäßen Lacklösungen sind unter Feuchtigkeitsausschluß stabil. Der Viskositätsanstieg beim Lagern ist äußerst gering. Sie härten unter Umgebungsbedingungen schnell zu vernetzten elastischen Lackfilmen aus. Härte und Lösungsmittelbeständigkeit liegen auf hohem Niveau.
Sie sind damit für eine Anwendung als Autoreparaturlacke bestens geeignet und dem Stand der Technik teilweise überlegen.

Beispiel 40

Dieses Beispiel beschreibt die Herstellung von pigmentierten Lackfilmen aus dem Copolymerisat A 13 und dem Oxazolan B 16. Das Pigment wird zunächst mit dem Copolymerisat A 13 auf einem Dreiwalzenmischer angerieben.

| Bestandteile | Gewichtsteile |
|---|---|
| Copolymerisatlösung A 13 | 1000 |
| Lösungsmittel Butylacetat | 220 |
| Verlaufsmittel Silikonöl (10 %ige Lösung in Methoxypropylenglykolacetat) | 8 |
| Titandioxid (vom Rutiltyp) | 400 |
| Mittel zur Verhinderung des Absetzens des Pigments (hochdisperse Kieselsäure) | 4 |

Zu je 100 Teilen der Anreibung wurden nun 8,9 Teile (A), 19,6 Teile (B) und 29,5 Teile (C) Oxazolan B 16 entsprechend einem Molverhältnis von 2,9:1, 1,3:1 bzw. 0,9:1 zugefügt und sorgfältig eingemischt. Die drei Lackansätze (A, B, C) sind im geschlossenen Gebinde bei sorgfältigem Ausschluß von Feuchtigkeit mindestens 1 Monat ohne Veränderung lagerfähig.
Proben der spritzfertig eingestellten Lacke werden auf Flußstahlplatten von 0,5 mm Dicke aufgespritzt und die Prüflinge während 5 Tagen bei ca. 23°C und einer relativen Luftfeuchtigkeit von ca. 60 % gelagert.

| Probe | Härte sec | Haftfestigkeit (Gt. 0-4) | Glanzgrad |
|---|---|---|---|
| A | 153 | 1 | 95 |
| B | 178 | 0 | 98 |
| C | 170 | 0 | 95 |

Der Vernetzungsgrad bzw. die Lösungsmittelbeständigkeit der 3 Proben ist - abhängig von Gehalt an Oxazolan - unterschiedlich:
Bei der Beurteilung gilt die in Tabelle 2 eingeführte Abstufung 0 bis 4.

| | | 5 min Einwirkung | | |
|---|---|---|---|---|
| Probe | Ethylglykolacetat | Toluol | Aceton | Superbenzin |
| A | 2 | 3 | 4 | 1 |
| B | 2 | 1 | 4 | 0 |
| C | 0 | 0 | 3 | 0 |

Zusammenfassung der Ergebnisse:

Die erfindungsgemäßen Bindemittel lassen sich auch zu pigmentierten hochglänzenden Lacken mit guten Gebrauchseigenschaften verarbeiten. Der Vernetzungsgrad ist vom Anteil an Oxazolan abhängig. Auch bei unteräquivalenter Vernetzung wird bereits eine gewisse Lösungsmittelbeständigkeit erreicht.

**Patentansprüche**

1. Verfahren zur Herstellung von feuchtigkeitshärtenden Bindemittelkompositionen durch Abmischung und gegebenenfalls Umsetzung unter Feuchtigkeitsausschluß von
A) 50 bis 97 Gew.-Teile an, Bernsteinsäureanhydrid-Einheiten aufweisenden, Copolymerisaten des Molekulargewichtsbereichs Mw von 1500 bis 75 000 von Maleinsäureanhydrid mit anderen olefinisch ungesättigten Monomeren,
mit
B) 3 bis 50 Gew.-Teilen an, gegebenenfalls gegenüber Säureanhydridgruppen reaktionsfähige Wasserstoffatome aufweisenden, Oxazolanen des Molekulargewichtsbereichs Mw 87 bis 10.000
gegebenenfalls unter Mitverwendung von Lösungsmitteln und/oder sonstigen aus der Lacktechnologie bekannten Hilfs- und Zusatzstoffen, wobei die Mengenverhältnisse der Einzelkomponenten unter Einbeziehung der gegebenenfalls in Abwesenheit von Feuchtigkeit zwischen den Komponenten A) und B) spontan ablaufenden Additionsreaktion so gewählt werden, daß in dem resultierenden Gemisch auf jede Oxazolangruppe 0,25 bis 10 Anhydridgruppen entfallen,
dadurch gekennzeichnet, daß es sich bei der Komponente A) um in an sich bekannter Weise hergestellte Copolymerisate von
a) 4,5 bis 45 Gew.-Teile Maleinsäureanhydrid,
b) 5 bis 80 Gew.-Teile Monomeren der Formel

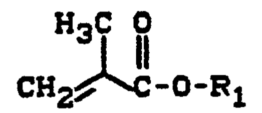

und/oder der Formel

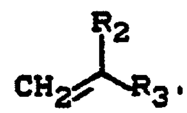

c) 15 bis 92 Gew.-Teile Monomeren der Formel

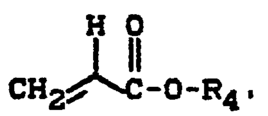

handelt, und wobei in den genannten Formeln
$R_1$ für einen aliphatischen oder cycloaliphatischen, gegebenenfalls Sauerstoff, Schwefel oder Stickstoff als Heteroatom enthaltenden Kohlenwasserstoffrest mit 1 bis 12 Kohlenstoffatomen steht,
$R_2$ für Wasserstoff, eine Methyl- oder Ethylgruppe oder für Chlor oder Fluor steht,
$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht, und
$R_4$ bezüglich seiner Bedeutung der für $R_1$ gemachten Definition entspricht.

2. Verfahren nach Anspruch 1, dadurch gekennzeichnet, daß die Mengenverhältnisse der Einzelkomponenten A) und B) so gewählt werden, daß unter Einbeziehung der eventuell spontan zwischen Säureanhydridgruppen und freien Amino- bzw. Hydroxylgruppen ablaufenden Reaktion in den erhaltenen Bindemittelkompositionen für jede Oxazolangruppe 0,6 bis 2,5 Anhydridgruppen vorliegen.

3. Verfahren gemäß Anspruch 1, dadurch gekennzeichnet, daß man als Komponente B) gegenüber Säureanhydridgruppen inerte Oxazolane verwendet und die Mengenverhältnisse der Komponenten A)

und B) so bemißt, daß in den resultierenden Gemischen 50 bis 97 Gew.-Teile der Komponente A) und 3 bis 50 Gew.-Teile der Komponente B) vorliegen.

4. Verfahren gemäß Anspruch 1 bis 3, dadurch gekennzeichnet, daß die Komponente A)
a) 6 bis 19 Gew.-Teile Maleinsäureanhydrid,
b) 41 bis 65 Gew.-Teile mindestens eines Monomeren der Formeln

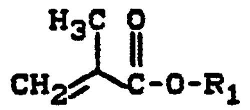

oder

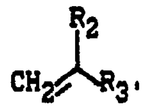

und
c) 25 bis 50 Gew.-Teile mindestens eines Monomeren der Formel

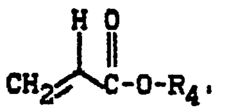

in copolymerisierter Form aufweist, wobei $R_1$, $R_2$, $R_3$ und $R_4$ die in Anspruch 1 genannte Bedeutung haben.

5. Verfahren gemäß Anspruch 1 bis 4, dadurch gekennzeichnet, daß die Komponente A) ein Copolymerisat darstellt, welches pro 100 Gew.-Teilen Maleinsäureanhydrid 40 bis 140 Gew.-Teile an Monomeren ausgewählt aus der Gruppe bestehend aus Styrol, Vinyltoluol, α-Methylstyrol, α-Ethylstyrol, kernsubstituierten, gegebenenfalls Isomerengemische darstellen Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

6. Verfahren gemäß Anspruch 1 bis 5, dadurch gekennzeichnet, daß die Komponente B) aus Verbindungen des Molekulargewichtsbereichs 87 bis 3000 mit 1 bis 4 Oxazolan-Ringen der allgemeinen Formel

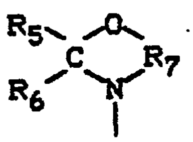

besteht, wobei
$R_5$ und $R_6$ für gleiche oder verschiedene Reste stehen und Wasserstoff oder Alkylreste mit 1 bis 8 Kohlenstoffatomen bedeuten, oder wobei $R_5$ und $R_6$ zusammen mit dem Kohlenstoffatom des Oxazolan-Rings einen cycloaliphatischen Kohlenwasserstoffrest mit insgesamt 5 oder 9 Kohlenstoffatomen bilden, mit der Maßgabe, daß höchstens einer der Reste $R_5$ oder $R_6$ für Wasserstoff steht, und
$R_7$ für einen Alkylenrest mit 2 bis 4 Kohlenstoffatomen steht, mit der Maßgabe, daß zwischen dem Sauerstoffatom und dem Stickstoffatom mindestens 2 Kohlenstoffatome angeordnet sind.

7. Verfahren gemäß den Ansprüchen 1 bis 6, dadurch gekennzeichnet, daß die Komponente B) aus Verbindungen des Molekulargewichtsbereichs 350 bis 1500 besteht, welche zwei oder drei Oxazolan-Ringe der in Anspruch 6 genannten allgemeinen Formel aufweisen, wobei $R_5$, $R_6$ und $R_7$ die in Anspruch 6 genannte Bedeutung haben.

8. Gemäß Anspruch 1 bis 7 erhältliche Bindemittelkompositionen.

9. Verwendung der gemäß Anspruch 1 bis 7 erhältlichen Bindemittelkompositionen als unter dem Einfluß von Feuchtigkeit aushärtbare Lacke oder Beschichtungsmassen oder zur Herstellung derartiger Lacke oder Beschichtungsmassen.

## Claims

1. A process for the production of moisture-hardening binder compositions by mixing and, optionally, reaction in the absence of moisture of

A) 50 to 97 parts by weight copolymers of maleic anhydride with other olefinically unsaturated monomers, the copolymers containing succinic anhydride units and having molecular weights Mw of 1 500 to 75 000 with

B) 3 to 50 parts by weight oxazolanes optionally containing hydrogen atoms reactive to acid anhydride groups and having a molecular weight Mw of 87 to 10 000,

optionally using solvents and/or other auxiliaries and additives known from lacquer technology, the quantitative ratios between the individual components, including the spontaneous addition reaction optionally taking place between components A) and B) in the absence of moisture, being selected so that the resulting mixture contains 0.25 to 10 anhydride groups for every oxazolane group, characterized in that component A) consists of copolymers prepared in known manner of

a) 4.5 to 45 parts by weight maleic anhydride,

b) 5 to 80 parts by weight monomers corresponding to the following formula

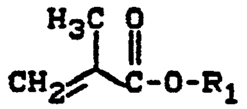

and/or to the following formula

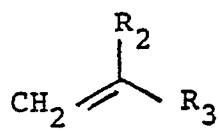

c) 15 to 92 parts by weight monomers corresponding to the following formula

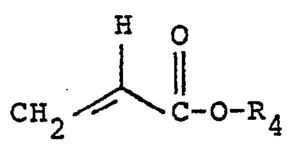 ;

in the above formulae,

$R_1$ is an aliphatic or cycloaliphatic $C_1$–$C_{12}$ hydrocarbon radical optionally containing oxygen, sulfur or nitrogen as heteroatom,

$R_2$ is hydrogen, a methyl or ethyl group or chlorine or fluorine,

$R_3$ is a $C_2$–$C_{15}$ aliphatic hydrocarbon radical, a $C_5$–$C_{10}$ cycloaliphatic hydrocarbon radical, a $C_7$–$C_{18}$ araliphatic hydrocarbon radical, a $C_6$–$C_{12}$ aromatic hydrocarbon radical, chlorine, fluorine, a nitrile group of a $C_2$–$C_{18}$ hydrocarbon radical containing one or more heteroatoms from the group comprising oxygen, sulfur and nitrogen in the form of ether, ester, amide, urethane, urea, thioester, thioether, oxirane, ketone, lactam or lactone groups, and

$R_4$ corresponds in its meaning to the definition or $R_1$.

2. A process as claimed in claim 1, characterized in that the quatitative ratios between the individual components A) and B) are selected so that, including the spontaneous reaction possibly taking place between acid anhydride groups and free amino or hydroxyl groups, the binder compositions obtained contain 0.6 to 2.5 anhydride groups for every oxazolane group.

3. A process as claimed in claim 1, characterized in that oxazolanes inert to acid anhydride groups are used as component B) and the quantitative ratios between components A) and B) are gauged in such a way that the resulting mixtures contain 50 to 97 parts by weight of component A) and 3 to 50 parts by weight of component B).

4. A process as claimed in claims 1 to 3, characterized in that component A) contains

a) 6 to 19 parts by weight maleic anhydride,

b) 41 to 65 parts by weight of at least one monomer corresponding to the following formula

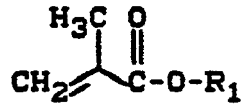

or to the following formula

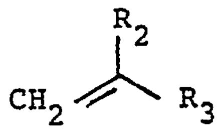

and

c) 25 to 50 parts by weight of at least one monomer corresponding to the following formula

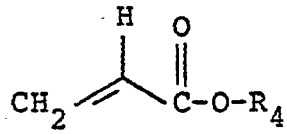

in copolymerized form, the percentages adding up to 100 and $R_1$, $R_2$, $R_3$ and $R_4$ having the meanings defined in claim 1.

5. A process as claimed in claims 1 to 4, characterized in that component A) is a copolymer containing per 100 parts by weight maleic anhydride 40 to 140 parts by weight of monomers selected from the group comprising styrene, vinyl toluene, α-methyl styrene, α-ethyl styrene, nucleus-substituted diethyl styrenes, isopropyl styrenes, butyl styrenes and methoxystyrenes optionally in the form of isomer mixtures, ethylvinyl ether, n-propylvinyl ether, isopropylvinyl ether, n-butylvinyl ether, isobutylvinyl ether, vinyl acetate, vinyl propionate, vinyl butyrate and mixtures of these monomers in copolymerized form, optionally in addition to other comonomers.

6. A process as claimed in claims 1 to 5, characterized in that component B) consists of compounds having a molecular weight of 87 to 3000 and containing 1 to 4 oxazolane rings corresponding to the following general formula

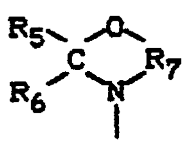

in which $R_5$ and $R_6$ may be the same or different and represent hydrogen or $C_1$–$C_8$ alkyl radicals or $R_5$ and $R_6$ together with the carbon atom of the oxazolane ring form a cycloaliphatic hydrocarbon radical containing a total of 5 or 9 carbon atoms, with the proviso that at most one of the substituents $R_5$ or $R_6$ is hydrogen, and $R_7$ is a $C_2$–$C_4$ alkylene radical, with the proviso that at least 2 carbon atoms are arranged between the oxygen atom and the nitrogen atom.

7. A process as claimed in claims 1 to 6, characterized in that component B) consists of compounds having a molecular weight of 350 to 1500 which contain two or three oxazolane rings corresponding to the general formula in claim 6, $R_5$, $R_6$ and $R_7$ having the meanings defined in claim 6.

8. Binder compositions obtainable in accordance with claims 1 to 7.

9. The use of the binder compositions obtainable in accordance with claims 1 to 7 as moisture-hardening lacquers or coating compositions or for the production of such lacquers or coating compositions.

## Revendications

1. Procédé de production de compositions de liants durcissant a l'humidité par mélange et, le cas échéant, réaction à l'abri de l'humidité,

A) de 50 à 97 parties en poids de copolymérisats porteurs de motifs anhydride d'acide succinique, de poids moléculaire Mp compris dans la plage de 1500 à 75 000, d'anhydride d'acide maléique avec d'autres monomères à non-saturation oléfinique, avec

B) 3 à 50 parties en poids d'oxazolanes, portant eventuellement des atomes d'hydrogene aptes à réagir vis-à-vis de groupes anhydride d'acide, de poids moléculaire Mp compris dans la plage de 87 à 10

000 le cas échéant en utilisant simultanément des solvants et/ou d'autres adjuvants et additifs connus dans la technologie des peintures, les rapports de quantités des composants individuels, y compris la réaction d'addition se déroulant spontanément, le cas échéant, entre les composants A) et B) en l'absence d'humidité, de manière qu'il y ait dans le mélange résultant, pour chaque groupe oxazolane, 0,25 à 10 groupes anhydride, caractérisé en ce que le composant A) est un copolymérisat, produit d'une manière connue,
a) de 4,5 à 45 parties en poids d'anhydride d'acide maléique,
b) de 5 à 80 parties en poids de monomères de formule

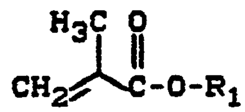

et/ou de formule

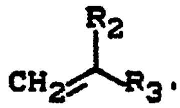

c) de 15 à 92 parties en poids de monomères de formule

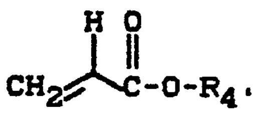

et dans les formules mentionnées,
$R_1$ représente un reste d'hydrocarbure aliphatique ou cycloaliphatique de 1 à 12 atomes de carbone, contenant éventuellement comme hétéro-atome de l'oxygène, du soufre ou de l'azote,
$R_2$ représente l'hydrogène, un groupe méthyle ou éthyle ou représente le chlore ou le fluor,
$R_3$ est un reste d'hydrocarbure aliphatique ayant 2 à 15 atomes de carbone, un reste d'hydrocarbure cycloaliphatique ayant 5 à 10 atomes de carbone, un reste d'hydrocarbure araliphatique ayant 7 à 18 atomes de carbone, un reste d'hydrocarbure aromatique ayant 6 à 12 atomes de carbone, le chlore, le fluor, un groupe nitrile ou un reste d'hydrocarbure de 2 à 18 atomes de carbone, qui contient un ou plusieurs hétéro-atomes du groupe constitué de l'oxygène, du soufre et de l'azote sous forme de groupes éther, ester, amide, uréthanne, urée, thioester, thio-éther, oxiranne, cétone, lactame ou actone et $R_4$ correspond, quant à sa signification, à la définition donnée pour $R_1$.

2. Procédé suivant la revendication 1, caractérisé en ce que les rapports de quantités des composants individuels A) et B) sont choisis de manière qu'il y ait dans les compositions de liants obtenues, pour chaque groupe oxazolane, 0,6 à 2,5 groupes anhydride, en tenant compte de la réaction se déroulant spontanément le cas échéant entre des groupes anhydride d'acide et des groupes amino ou hydroxyle libres.

3. Procédé suivant la revendication 1, caractérisé en ce qu'on utilise comme composant B) des oxazolanes inertes vis-à-vis de groupes anhydride d'acide et les rapports de quantités des composants A) et B) sont mesurés de manière qu'il y ait dans les mélanges résultants 50 à 97 parties en poids de composant A) et 3 à 50 parties en poids de composant B).

4. Procédé suivant les revendications 1 à 3, caractérisé en ce que le composant A) présente, sous la forme copolymérisée,
a) 6 à 19 parties en poids d'anhydride d'acide maléique,
b) 41 à 65 parties en poids d'au moins un monomère de formules

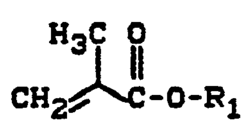

ou

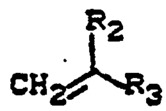

et

c) 25 à 50 parties en poids d'au moins un monomère de formule

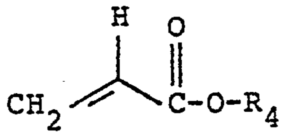

$R_1$, $R_2$, $R_3$ et $R_4$ ayant la définition indiquée dans la revendication 1.

5. Procédé suivant les revendications 1 à 4, caractérisé en ce que le composant A) représente un copolymérisat qui contient, pour 100 parties en poids d'anhydride d'acide maléique, 40 à 140 parties en poids de monomères choisis dans le groupe comprenant le styrène, le vinyltoluene, l'α-méthylstyrène, l'α-éthylstyrène, des diéthylstyrènes, isopropylstyrènes, butylstyrènes et méthoxystyrènes substitués sur le noyau, représentant éventuellement des mélanges d'isomères, l'éther d'éthyle et de vinyle, l'éther de n-propyle et de vinyle, l'éther d'isopropyle et de vinyle, l'éther de n-butyle et de vinyle, l'éther d'isobutyle et de vinyle, l'acétate de vinyle, le propionate de vinyle, le butyrate de vinyle et des mélanges quelconques de ces monomères sous une forme copolymérisée le cas échéant à côte d`autres comonomères.

6. Procédé suivant les revendications 1 à 5 caractérisé en ce que le composant B) est constitué de composés de poids moléculaire compris dans la plage de 87 à 3000 avec 1 à 4 noyaux d'oxazolane de formule générale

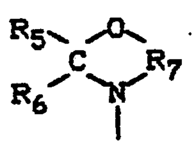

dans laquelle

$R_5$ et $R_6$ représentent des restes identiques ou différents et designent l'hydrogène ou des restes alkyle ayant 1 à 8 atomes de carbone ou bien $R_5$ et $R_6$ forment conjointement avec l'atome de carbone du noyau d'oxazolane un reste d'hydrocarbure cycloaliphatique ayant au total 5 ou 9 atomes de carbone sous réserve qu'au maximum l'un des restes $R_5$ ou $R_6$ représente l'hydrogène et

$R_7$ est un reste alkylène de 2 à 4 atomes de carbone sous réserve qu'au moins deux atomes de carbone soient disposés entre l'atome d'oxygène et l'atome d'azote.

7. Procédé suivant les revendications 1 à 6 caractérisé en ce que le composant B) est constitué de composés de poids moléculaire compris dans la plage de 350 à 1500 qui présentent deux ou trois noyaux d'oxazolane de formule générale mentionnée dans la revendication 6, $R_5$ $R_6$ et $R_7$ ayant la définition indiquée dans la revendication 6.

8. Compositions de liants obtenues conformément aux revendications 1 à 7.

9. Utilisation des compositions de liants obtenues conformement aux revendications 1 à 7 comme peintures ou matières de revêtement durcissant sous l'influence de l'humidité ou pour la préparation de telles peintures ou matières de revêtement.